# EUROPÄISCHE PATENTANMELDUNG

(11) **EP 2 096 743 A1**
(43) Veröffentlichungstag der Anmeldung: **02.09.2009**
(21) Anmeldenummer: 08002148.8
(22) Anmeldetag: 06.02.2008
(51) Int. Cl.: H02M 3/158

(54) **Spannungswandlerschaltung**

(71) Anmelder: i f m electronic gmbh, D-45127 Essen (DE)
(72) Erfinder: Franz, Hartmut, 88630 Pfullendorf (DE)
(74) Vertreter: Gesthuysen, von Rohr & Eggert

(57) **Zusammenfassung**

Beschrieben und dargestellt ist eine Spannungswandlerschaltung zum Umwandeln einer veränderlichen Eingangsspannung (Uₑ) in eine als Gleichspannung zur Verfügung zu stellende stabilisierte Ausgangsspannung ((Uₐ), mit einem ersten Schaltelement (1), im Ausführungsbeispiel einem Schalttransistor, einem ersten Gleichrichter (2), im Ausführungsbeispiel einer Gleichrichterdiode, einer Speicherdrossel (3), einem zweiten Schaltelement (4), im Ausführungsbeispiel einem Schalttransistor, einem zweiten Gleichrichter (5), imAusführungsbeispiel einer Gleichrichterdiode, einem Speicherkondensator (6), einem Meßwiderstand (7) und einer Steuer- und Regeleinheit (8).

Die erfindungsgemäße Spannungswandlerschaltung zeichnet sich durch ein verbessertes Übertragungs- bzw. Regelverhalten aus, und zwar dadurch, daß das erste Schaltelement (1) und das zweite Schaltelement (4) dann, wenn die Eingangsspannung (Uₑ) größer als das X-fache der gewollten Ausgangsspannung ((Uₐ) und kleiner als das Y-fache der gewollten Ausgangsspannung ((Uₐ) ist, synchron angesteuert sind, d. h. stets gleichzeitig leitend und stets gleichzeitig sperrend sind.

## Beschreibung

Die Erfindung betrifft eine Spannungswandlerschaltung zum Umwandeln einer veränderlichen Eingangsspannung in eine als Gleichspannung zur Verfügung zu stellende stabilisierte Ausgangsspannung.

Zur Versorgung elektrischer Verbraucher mit elektrischer Energie stehen in der Regel Wechselspannungsnetze, auch AC-Netze genannt, mit unterschiedlichen Nennspannungen (Nennspannung = Sollspannung) zur Verfügung, insbesondere mit einer Nennspannung von 230 V, aber auch - nicht selten - mit einer Nennspannung von 110 V. In besonderen Situationen stehen zur Versorgung elektrischer Verbraucher mit elektrischer Energie aber auch Gleichspannungsnetze, auch DC-Netze genannt, zur Verfügung, auch diese mit unterschiedlichen Nennspannungen.

Sowohl bei Wechselspannungsnetzen als auch bei Gleichspannungsnetzen ist die jeweilige Betriebsspannung (Betriebsspannung = Istspannung), also bei Wechselspannungsnetzen der jeweilige Amplitudenmaximalwert, nicht immer über der Zeit konstant; das hat mit wechselnden Belastungen der Netze zu tun, denen die elektrischen Energieerzeuger nur zeitverzögert folgen können.

Häufig benötigen elektrische Verbraucher zur Energieversorgung Gleichspannung, und zwar eine über der Zeit konstante Gleichspannung, also eine stabilisierte Gleichspannung. Um aus Wechselspannungsnetzen eine Gleichspannung zu gewinnen, benötigt man eine Gleichrichterschaltung, mit der eine pulsierende Gleichspannung gewonnen wird, die dann in bekannter Weise geglättet wird. Dem Bedürfnis nach einer stabilisierten Gleichspannung wird man mit einer Spannungswandlerschaltung zum Umwandeln einer veränderlichen Eingangsspannung in eine als Gleichspannung zur Verfügung zu stellende stabilisierte Ausgangsspannung gerecht. Eine Spannungswandlerschaltung der in Rede stehenden Art ist also eine Regelschaltung, die die Aufgabe hat, Spannungsschwankungen der Eingangsspannung auszuregeln, also dafür zu sorgen, daß auch bei nicht konstanter Eingangsspannung eine konstante Ausgangsspannung zur Verfügung steht.

Zu Spannungswandlerschaltungen, also Regelschaltungen betreffenden Stand der Technik wird zunächst ganz allgemein auf den "Tietze / Schenk", also auf U. Tietze / Ch. Schenk "Halbleiter-Schaltungstechnik", 12. Auflage, Springer-Verlag, 2002 Seiten 926 ff. verwiesen. Dort sind zunächst lineare Spannungsregler beschrieben, und zwar einerseits solche mit fester Ausgangsspannung, andererseits solche mit einstellbarer Ausgangsspannung. Lineare Spannungsregler haben den Nachteil eines relativ geringen Wirkungsgrades; dieser liegt häufig nur bei 25 % bis 50 % (aaO, Seite 942). Wesentlich bessere Wirkungsgrade als lineare Spannungsregler weisen Schaltnetzteile auf, bei denen man zwischen primärgetakteten Schaltreglern und sekundärgetakteten Schaltreglern unterscheidet (aaO, Seiten 942 bis 944). Zu den sekundärgetakteten Schaltreglern gehören Abwärtswandler, Aufwärtswandler und invertierende Wandler (aaO, Seiten 944 bis 952). Der "Tietze / Schenk" ist Handwerkszeug des hier relevanten Fachmanns. Folglich wird ausdrücklich auf das verwiesen, was in der 12. Auflage des "Tietze / Schenk" im Kapitel 16: Stromversorgung, insbesondere in den Abschnitten 16.3 bis 16.6, aber auch im Abschnitt 16.7 offenbart ist.

Heute wird an an Wechselspannungsnetze anzuschließende Spannungswandlerschaltungen der beschriebenen Art die Forderung gestellt, daß der dem Wechselspannungsnetz entnommene Strom zur Reduzierung der Oberwellen des Stroms eine entsprechende Stromregelung zuläßt; eine solche Stromregelung wird häufig mit "Power Factor Correction", abgekürzt mit PFC bezeichnet, eine entsprechende Regelschaltung mit PFC-Regelschaltung bezeichnet.

Im Stand der Technik sind zunächst PFC-Regelschaltungen bekannt, die eine Gleichspannung erzeugen, deren Spannungswert immer oberhalb des Amplitudenmaximalwertes der Nennspannung des Wechselspannungsnetzes liegt; diese PFC-Regelschaltungen sind also reine Aufwärtswandler. Dabei wird dann die Stromentnahme aus dem Wechselspannungsnetz durch Strommessung und Einbringen einer auf den Sinusverlauf der Eingangsspannung abgestimmten Regelgröße in bezug auf den Phasenwinkel und die Oberwellen entsprechend gesteuert.

Nachteilig ist bei den zuvor beschriebenen PFC-Regelschaltungen der hohe Spannungswert, der erhöhte Anforderungen an die Spannungsfestigkeit der Folgeschaltung stellt; das gilt sowohl bezüglich der Auswahl der Bauteile als auch bezüglich der Auslegung der Isolation sowie der Luft- und Kriechstrekken. Nachteilig ist weiter, daß beim Betrieb an Wechselspannungsnetzen mit relativ kleinen Nennspannungen, z. B. einer Nennspannung von 110 V, die zu schaltenden Ströme entsprechend groß sind, was zu entsprechend höheren Verlusten und einem entsprechend reduzierten Wirkungsgrad führt.

Während die zuvor beschriebene PFC-Regelschaltung einstufig aufgebaut ist, sind für den Fall, daß der Spannungswert der stabilisierten Ausgangsspannung kleiner sein soll als die Amplitudenmaximalwerte der Eingangsspannung, PFC-Regelschaltungen bekannt, die zweistufig aufgebaut sind, die also aus zwei kaskadierten Wandlerstufen bestehen. Üblicherweise ist die erste Stufe ein Abwärtswandler, auch Buckwandler genannt, der mit einem im Strompfad liegenden Schalttransistor die Eingangsspannungen, die oberhalb des Spannungswertes der Ausgangsspannung liegen, auf den entsprechend kleineren Spannungswert wandeln kann. Als zweite Stufe ist ein Aufwärtswandler, auch Boostwandler genannt, vorgesehen, der Eingangsspannungen unterhalb des gewollten Spannungswertes der Ausgangsspannung auf die gewollte Ausgangsspannung anhebt. Dabei nutzen der Abwärtswandler = Buckwandler und der Aufwärtswandler = Boostwandler die gleiche Speicherdrossel. Stand der Technik ist es dabei, die beiden Wandler, also den Abwärtswandler = Buckwandler und den Aufwärtswandler = Boostwandler abhängig davon zu betreiben, ob die Eingangsspannung größer oder kleiner als die zur Verfügung zu stellende Ausgangsspannung ist. Ist die Eingangsspannung größer als die zur Verfügung zu stellende Ausgangsspannung, arbeitet der Abwärtswandler, ist die Eingangsspannung kleiner als die zur Verfügung zu stellende Ausgangsspannung, arbeitet der Aufwärtswandler. Arbeitet der Abwärtswandler = Buckwandler so spricht man vom Buckbetrieb bzw. vom Buckmode, arbeitet der Aufwärtswandler = Boostwandler, so spricht man vom Boostbetrieb bzw. Boostmode. Da im Stand der Technik sowohl der Buckwandler als auch der Boostwandler einen Schalttransistor aufweist, wird im Buckbetrieb der Schalttransistor des Boostwandlers konstant sperrend geschaltet, während im Boostbetrieb der Schalttransistor des Buckwandlers konstant leitend geschaltet ist. Der alternative Betrieb des Buckwandler einerseits und des Boostwandlers andererseits gestattet es, bekannte Wandlertopologien hintereinander zu schalten, ohne deren Übertragungs- oder Regelverhalten zu beeinflussen. Zu den bekannten Wandlertopologien, und zwar sowohl für Abwärtswandler als auch für Aufwärtswandler, wird nochmals auf "Tietze / Schenk", aaO, verwiesen, Typenübersicht auf Seite 951,

Bei der zuvor beschriebenen PFC-Regelschaltung weist jeder Wandler für sich einen hohen Wirkungsgrad auf. Die Kaskadierung der Wandler bringt es jedoch mit sich, daß im Buckmode eine zu dem Boostwandler gehörende Ausgangsdiode einen Zusatzverlust bewirkt, während im Boostmode der Schalttransistor der Buckstufe einen Zusatzverlust bewirkt. Eine Buck-Boost-Kaskade ist also im Wirkungsgrad immer schlechter als der jeweilige Wandler, der aktuell im Betrieb ist,

Zuvor ist ausgeführt worden, daß bei den zum Stand der Technik gehörenden PFC-Regelschaltungen mit einem Abwärtswandler = Buckwandler und einem Aufwärtswandler = Boostwandler die beiden Wandler abhängig davon betrieben werden, ob die Eingangsspannung größer oder kleiner als die zur Verfügung zu stellende Ausgangsspannung ist. Ist die Eingangsspannung gleich der zur Verfügung zu stellenden Ausgangsspannung, so liegt eine harte Treimstelle für das Übertragungs- oder Regelverhalten vor. Insbesondere im Übergangsbereich, wenn die Eingangsspannung nur geringfügig von der zur Verfügung zu stellenden Ausgangsspannung abweicht, treten durch die unterschiedlichen Transferfunktionen der beiden Wandler Spannungs- und Stromtransienten auf. Insbesondere das Einbringen einer auf den Sinusverlauf der Eingangsspannung abgestimmten Regelgröße, also einer Führungsgröße für den Strom für die verlangte "Power Factor Correction", also für die verlangte PFC, wird erschwert. Die Problematik besteht darin, daß dann, wenn die Eingangsspannung gleich (oder annähernd gleich) der gewollten Ausgangsspannung ist, für die beiden Wandler, also für den Abwärtswandler und den Aufwärtswandler, gilt: Abwärtswandler = Buckwandler im dauerleitenden Betrieb, Aufwärtswandler = Boostwandler im dauersperrenden Betrieb. Durch die Gleichheit von Eingangsspannung und gewollter Ausgangsspannung gibt es kein Spannungsgefälle zwischen dem Eingang und dem Ausgang; es kann also kein Strom fließen. Für die verlangte "Power Factor Correction" wird aber ein Sinusverlauf verlangt, synchron zum Sinusverlauf der Eingangsspannung.

Relevanter Stand der Technik in bezug auf das, was zuvor insgesamt ausgeführt worden ist, ist einerseits die aus Juli 2005 stammende IBM-Veröffentlichung "A Combined Buck and Boost Converter for Single-Phase Power-Factor Correction" von Kevin Covi, andererseits die am 9, August 2006 erschienene europäische Offenlegungsschrift 1 689 070, die auf eine USA-Prioritätsanmeldung der Firma LINEAR TECHNOLOGY CORPORATION vom 8. Februar 2005 zurückgeht. (LINEAR TECHNOLOGY CORPORATION ist einer der führenden Hersteller der bekannten Wandlertopologien, und zwar sowohl für Abwärtswandler = Buckwandler als auch für Aufwärtswandler = Boostwandler, wozu auf den "Tietze / Schenk", aaO, Seite 951 verwiesen werden darf.)

Bei der aus der zuvor angeführten IBM-Veröffentlichung bekannten Spannungswandlerschaltung, nachfolgend immer mit IBM-Lösung bezeichnet, ist eine komplexe Regelung für die Ansteuerung der beiden Wandler realisiert. Der Regelungsansatz besteht darin, mit Hilfe von zwei Rampenfunktionen und einem gemeinsamen Steuersignal die beiden Wandler zu betreiben. Hierdurch ergibt sich die Notwendigkeit, daß der Boostwandler im Dutycycle erst auf Minimum fährt, bevor der Buckwandler mit maximalem Dutycycle gestartet werden kann (Dutycycle ist das Verhältnis der Zeit, in der der jeweilige Schalttransistor leitend ist, über der zeitlichen Periode, also Tₗₑᵢₜ / T_{periode}, über dem Verhältnis der Ausgangsspannung zur Eingangsspannung, also über Uₐ / U_{e'}) Da im Umschaltaugenblick durch den geforderten Strom eine große Pulsbreite vorliegt und eine schlagartige Veränderung des Dutycycle aufgrund der begrenzten Regeldynamik schwer realisierbar ist, sind erhebliche Ausregelvorgänge im Strom- und Spannungssignal zu erwarten.

Auch bei der aus der europäischen Offenlegungsschrift 1 689 007 bekannten Spannungswandlerschaltung, nachfolgend immer mit LTC-Lösung bezeichnet, ist eine komplexe Regelung für die Ansteuerung der beiden Wandler realisiert, Auch bei der LTC-Lösung werden, wie bei der IBM-Lösung, die beiden Wandler mit einem gemeinsamen Steuersignal im jeweiligen Betriebsbereich betrieben. Während bei der IBM-Lösung zwei Betriebsbereiche vorliegen und zwischen diesen Betriebsbereichen ein harter Übergang gegenläufig erfolgt, ist bei der LTC-Lösung ein Überlappungsbereich zwischen den beiden Betriebsbereichen realisiert, der für Eingangsspannungen gilt, die in einem de oder einem Gleichrichtertransistor, einer Speicherdrossel, einem zweiten Schaltelement, wiederum z. B. einem Schaltransistor, einem zweiten Gleichrichter, wiederum z. B, einer Gleichrichterdiode oder einem Gleichrichtertransistor, einem Speicherkondensator, einem Meßwiderstand und einer Steuer- und Regeleinheit.

Der Erfindung liegt nun die Aufgabe zugrunde, die bekannte, zuvor beschriebene Spannungswandlerschaltung hinsichtlich des Übertragungs- bzw. Regelverhaltens zu verbessern. Dabei kann auch angestrebt werden, zusätzlich eine Regelfunktion einzufügen, die es zuläßt, die Kurvenform des Eingangsstroms derart vorzugeben, daß die Anforderungen an eine sinusförmige Stromaufnahme entsprechend den geltenden PFC-Anforderungen zu realisieren. Ergänzend, aber nicht zwingend, wird angestrebt, daß bei der Realisierung Steuer- und/oder Regelbausteine zum Einsatz kommen können, die als Standard-Bauteile verfügbar sind.

Die erfindungsgemäße Spannungswandlerschaltung, bei der die zuvor hergeleitete und aufgezeigte Aufgabe gelöst ist, ist zunächst und im wesentlichen dadurch gekennzeichnet, daß das erste Schaltelement und das zweite Schaltelement dann, wenn die Eingangsspannung größer als das X-fache der gewollten Ausgangsspannung und kleiner als das Y-fache der gewollten Ausgangsspannung ist, synchron angesteuert sind, d. h. stets gleichzeitig leitend und stets gleichzeitig sperrend sind. Betrachtet man die erfindungsgemäße Spannungswandlerschaltung als Zusammenschaltung, und zwar als Hintereinanderschaltung eines üblichen Abwärtswandlers, also eines üblichen Buckwandlers, und eines üblichen Aufwärtswandlers, also eines üblichen Boostwandlers, so gehört das erste Schaltelement zum Abwärtswandler und das zweite Schaltelement zum Aufwärtswandler. Durch die Vorgabe "Eingangsspannung größer als das X-fache der gewollten Ausgangsspannung und kleiner als das Y-fache der gewollten Ausgangsspannung" - mit X < Uₐᵤₛ und Y > Uₐᵤₛ - ist ein Bereich des Verhältnisses von Eingangsspannung zu gewollter Ausgangsspannung definiert, in dem die erfindungsgemäße Spannungswandlerschaltung im Buck-/Boost-Combimode arbeitet. Die erfindungsgemäße Spannungswandlerschaltung hat also drei Betriebsbereiche. Ist die Eingangsspannung kleiner oder gleich dem X-fachen der gewollten Ausgangsspannung, so arbeitet die erfindungsgemäße Spannungswandlerschaltung im Boostbetrieb.

Bereich liegen, der um einen bestimmten Betrag unterhalb der Ausgangsspannung beginnt und um einen bestimmten Betrag oberhalb der Ausgangsspannung endet. In diesem Bereich werden innerhalb eines Clockzyklus zwei Operationen durchgeführte bei denen abhängig von der Eingangsspannung die beiden Wandler, also der Buckwandler bzw. der Boostwandler, sequentiell angesteuert werden. Hierdurch ergeben sich zusätzliche Schaltzyklen innerhalb einer Periode. Bei der LTC-Lösung wird der im Normalbetrieb stetige Rampenverlauf des Drosselstroms innerhalb einer Periode in seiner Steigung hart umgeschaltet, so daß in einem Teil der Periode der Buckmode und in dem anderen Teil der Periode der Boostmode vorliegt. Im Überlappungsbereich werden die Schalttransistoren mit Impulsen unterschiedlicher Länge angesteuert, so daß innerhalb einer Periode bis zu vier verlustbehaftete Schaltvorgänge vorliegen. Die unterschiedliche Ansteuerung der Schalttransistoren verändert die Spannungsverhältnisse über der Speicherdrossel, Es ergeben sich innerhalb einer Periode also auch Umschaltungen in der Steigung des durch die Speicherdrossel fließenden Stroms. Zusätzlich bewirken die mehrfachen Schaltvorgänge innerhalb einer Periode Schaltstörungen, die zur Beeinflussung der zum jeweiligen Zeitpunkt noch aktiven Regelvorgänge führen können. Das in der LTC-Lösung vorgestellte Konzept arbeitet mit zusätzlichen Schalt- bzw. Steuervorgängen innerhalb eines Taktzyklus. Hierdurch sind erhebliche Anforderungen bezüglich Geschwindigkeit und Komplexität an den zu realisierenden Steuer- bzw. Regelbaustein zu stellen; herkömmliche standardisierte Steuer- und Regelbausteine erfüllen diese Funktionen nicht. Des weiteren ist bei der LTC-Lösung die Realisierung einer "Power Factor Correction" nicht berücksichtigt, so daß das zusätzliche Einbringen einer Regelgröße zur Erzielung eines sinusförmigen Stromflusses nicht realisiert ist,

Konkret geht die Erfindung aus von dem Stand der Technik, der zum Beispiel aus dem "Tietze / Schenk bekannt ist (aaO, unter anderem Seite 944, Abb. 16.37, Absatzwandler, und Seite 949, Abb. 16.44, Aufwärtswandler). Dabei ist nur eine Speicherdrossel verwirklicht, die funktional einerseits zum Abwärtswandler und andererseits zum Aufwärtswandler gehört, Auch ist nur ein Speicherkondensator vorgesehen, der sowohl zum Abwärtswandler als auch zum Aufwärtswandler gehört. Die bekannte Spannungswandlerschaltung, von der die Erfindung ausgeht, besteht also aus einem ersten Schaltelement, z. B. einem Schalttransistor, einem ersten Gleichrichter, z. B. einer Gleichrichterdiode oder einem Gleichrichtertransistor, einer Speicherdrossel, einem zweiten Schaltelement, wiederum z. B. einem Schaltransistor, einem zweiten Gleichrichter, wiederum z. B. einer Gleichrichterdiode oder einem Gleichrichtertransistor, einem Speicherkondensator, einem Meßwiderstand und einer Steuer- und Regeleinheit.

Der Erfindung liegt nun die Aufgabe zugrunde, die bekannte, zuvor beschriebene Spannungswandlerschaltung hinsichtlich des Übertragungs- bzw. Regelverhaltens zu verbessern. Dabei kann auch angestrebt werden, zusätzlich eine Regelfunktion einzufügen, die es zuläßt, die Kurvenform des Eingangsstroms derart vorzugeben, daß die Anforderungen an eine sinusförmige Stromaufnahme entsprechend den geltenden PFC-Anforderungen realisiert werden können. Ergänzend, aber nicht zwingend, wird angestrebt, daß bei der Realisierung Steuer und/oder Regelbausteine zum Einsatz kommen können, die als Standard-Bauteile verfügbar sind.

Die erfindungsgemäße Spannungswandlerschaltung, bei der die zuvor hergeleitete und aufgezeigte Aufgabe gelöst ist, ist zunächst und im wesentlichen dadurch gekennzeichnet, daß das erste Schaltelement und das zweite Schaltelement dann, wenn die Eingangsspannung größer als das X-fache der gewollten Ausgangsspannung und kleiner als das Y-fache der gewollten Ausgangsspannung ist, synchron angesteuert sind, d. h. stets gleichzeitig leitend und stets gleichzeitig sperrend sind. Betrachtet man die erfindungsgemäße Spannungswandlerschaltung als Zusammenschaltung, und zwar als Hintereinanderschaltung eines üblichen Abwärtswandlers, also eines üblichen Buckwandlers, und eines üblichen Aufwärtswandlers, also eines üblichen Boostwandlers, so gehört das erste Schaltelement zum Abwärtswandler und das zweite Schaltelement zum Aufwärtswandler. Durch die Vorgabe "Eingangsspannung größer als das X-fache der gewollten Ausgangsspannung und kleiner als das Y-fache der gewollten Ausgangsspannung" - mit X < Uₐᵤₛ und Y > Uₐᵤₛ - ist ein Bereich des Verhältnisses von Eingangsspannung zu gewollter Ausgangsspannung definiert, in dem die erfindungsgemäße Spannungswandlerschaltung im Buck-Boost-Combimode arbeitet. Die erfindungsgemäße Spannungswandlerschaltung hat also drei Betriebsbereiche. Ist die Eingangsspannung kleiner oder gleich dem X-fachen der gewollten Ausgangsspannung, so arbeitet die erfindungsgemäße Spannungswandlerschaltung im Boostbetrieb.

Ist die Eingangsspannung gleich oder größer dem Y-fachen der gewollten Ausgangsspannung, so arbeitet die erfindungsgemäße Spannungswandlerschaltung im Buckbetrieb. Ist die Eingangsspannung größer als das X-fache der gewollten Ausgangsspannung und kleiner als das Y-fache der gewollten Ausgangsspannung, so arbeitet die erfindungsgemäße Spannungswandlerschaltung, wie bereits ausgeführt, im Buck-/Boost-Combibetrieb.

Der Wirkungsgrad der erfindungsgemäßen Spannungswandlerschaltung ist sowohl im Buckbetrieb als auch im Boostbetrieb besser als dann, wenn die Spannungswandlerschaltung im Buck-/Boost-Combimode arbeitet. Folglich werden die Werte für X und für Y so gewählt, daß der Bereich der Eingangsspannung, bezogen auf die gewollte Ausgangsspannung, in dem die erfindungsgemäße Spannungswandlerschaltung sowohl im Buckbetrieb als auch im Boostbetrieb arbeitet, so eng wie möglich bzw. sinnvoll gewählt, - wobei auch Bauteiletoleranzen und Temperaturdriften berücksichtigt werden müssen. Der Wert für X kann z. B. zwischen 0,8 und 0,98, vorzugsweise zwischen 0,85 und 0,95, insbesondere bei etwa 0,9, der Wert für Y kann z. B. zwischen 1,02 und 1,2, vorzugsweise zwischen 1,05 und 1,15, insbesondere bei etwa 1,1 liegen, Es besteht aber auch die Möglichkeit, den Bereich der Eingangsspannung, bei dem das erste Schaltelement und das zweite Schaltelement synchron angesteuert sind, betragsmäßig festzulegen, z. B. zwischen etwa 20 bis 5 V unterhalb der gewollten Ausgangsspannung und etwa 5 bis 20 V oberhalb der gewollten Ausgangsspannung.

Eine bevorzugte Ausführungsform der erfindungsgemäßen Spannungswandlerschaltung ist ergänzend dadurch gekennzeichnet, daß das erste Schaltelement beim Auftreten einer transienten Überspannung durch die Steuer- und Regeleinheit sperrend gesteuert wird.

Dadurch, daß bei der erfindungsgemäßen Spannungswandlerschaltung ein Betriebsbereich realisiert ist, in dem die Spannungswandlerschaltung im Buck-/Boost-Combimode arbeitet, ist das Übertragungs- bzw. Regelverhalten der erfindungsgemäßen Spannungswandlerschaltung besser als das der bekannten Spannungswandlerschaltungen, von denen die Erfindung ausgeht.

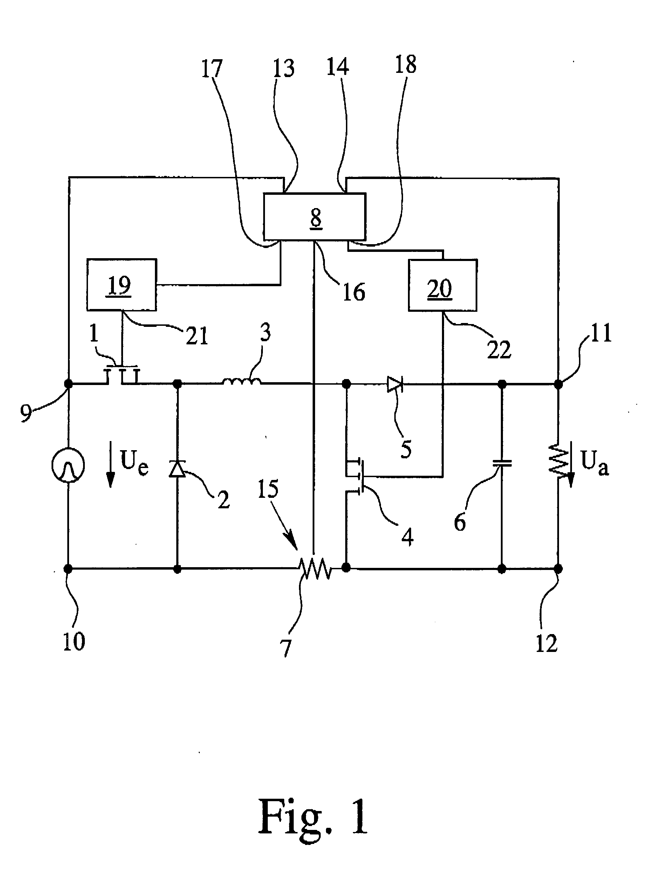

Im folgenden wird nun die erfindungsgemäße Spannungswandlerschaltung anhand eines in der Fig. 1 dargestellten Ausführungsbeispiels nochmals erläutert.

Die erfindungsgemäße Spannungswandlerschaltung besteht, wie die zum Stand der Technik gehörende Spannungswandlerschaltung, von der die Erfindung ausgeht, aus einem ersten Schaltelement 1, im dargestellten Ausführungsbeispiel einem Schalttransistor, einem ersten Gleichrichter 2, im dargestellten Ausführungsbeispiel einer Gleichrichterdiode, einer Speicherdrossel 3, einem zweiten Schaltelement 4, im dargestellten Ausführungsbeispiel wiederum einem Schalttransistor, einem zweiten Gleichrichter 5, in dem dargestellten Ausführungsbeispiel wiederum einer Gleichrichterdiode, einem Speicherkondensator 6, einem Meßwiderstand 7 und einer Steuer- und Regeleinheit 8. In der Figur sind eingangsseitig eine Eingangsspannung Uₑ und ausgangsseitig eines Ausgangsspannung Uₐ angedeutet, und zwar zwischen zwei Eingangsanschlüssen 9 und 10 sowie zwei Ausgangsanschlüssen 11 und 12. Der Eingangsanschluß 9 ist einerseits mit dem ersten Schaltelement 1 und andererseits mit einem ersten Eingang 13 der Steuer- und Regeleinheit 8 verbunden. Das erste Schaltelement 1 ist im übrigen sowohl mit dem ersten Gleichrichter 2 als auch mit der Speicherdrossel 3 verbunden. Die Speicherdrossel 3 ist im übrigen mit dem zweiten Schaltelement 4 und dem zweiten Gleichrichter 5 verbunden. Der zweite Gleichrichter 5 ist wiederum mit dem Speicherkondensator 6 und dem Ausgangsanschluß 11 verbunden. Der Ausgangsanschluß 11 ist mit einem zweiten Eingang 14 der Steuer- und Regeleinheit 8 verbunden. Verbunden sind des weiteren der Eingangsanschluß 10 mit dem ersten Gleichrichter 2 und dem Meßwiderstand 7, der Ausgangsanschluß 12 mit dem zweiten Schaltelement 4, dem Speicherkondensator 6 und dem Meßwiderstand 7 sowie ein Abgriff 15 des Meßwiderstandes 7 mit einem dritten Eingang 16 der Steuer- und Regeleinheit 8. Das erste Schaltelement 1 und das zweite Schaltelement 4 werden von der Steuer- und Regeleinheit 8 angesteuert, und zwar über an Ausgänge 17 und 18 der Steuer- und Regeleinheit 8 angeschlossene Ansteuereinheiten 19 und 20, deren Ausgänge 21 und 22 mit den Steuerelektroden der Schaltelemente 1 und 4 verbunden sind.

Bei der erfindungsgemäßen Spannungswandlerschaltung kann die - häufig verlangte - "Power Factor Correction" dadurch realisiert werden, daß als Steuer- und Regeleinheit 8 ein am Markt erhältliches Bauteil verwendet wird; solche Steuer- und Regeleinheiten sind z. B. von den Firmen Fairchild Semiconducter GmbH und Texas Instruments GmbH erhältlich.

Die erfindungsgemäße Spannungswandlerschaltung ist nun dadurch gekennzeichnet, daß das erste Schaltelement 1 und das zweite Schaltelement 4 dann, wenn die Eingangsspannung U_{c} größer als das X-fache der gewollten Ausgangsspannung Vₐ und kleiner als das Y-fache der gewollten Ausgangsspannung Uₐ ist, von der Steuer- und Regeleinheit 8 - über die Ansteuereinheit 19 bzw. die Ansteuereinheit 20 - synchron angesteuert sind; das erste Schaltelement 1 und das zweite Schaltelement 4 sind also stets gleichzeitig leitend und stets gleichzeitig sperrend.

Im übrigen gilt für eine bevorzugte Ausführungsform der erfindungsgemäßen Spannungswandlerschaltung, daß das erste Schaltelement 1 beim Auftreten einer transienten Überspannung durch die Steuer- und Regeleinheit 8 sperrend gesteuert wird, so daß eine transiente Überspannung die Bauteile der erfindungsgemäßen Spannungswandlerschaltung nicht beschädigen kann.

Die Ansteuerung der beiden Schalter 1 und 4 - von der Steuer- und Regeleinheit 8 über die Ansteuereinheiten 19 und 20 - kann mit pulsbreitenmodulierten oder mit frequenzvariablen Ansteuersignalen erfolgen.

Weiter oben ist ausgeführt, daß der Wirkungsgrad der erfindungsgemäßen Spannungswandlerschaltung sowohl im Buckbetrieb als auch im Boostbetrieb besser ist als dann, wenn die Spannungswandlerschaltung sowohl im Buck-/Boost-Combimode arbeitet. Kommt es auf den Wirkungsgrad nicht besonders an, dann kann die erfindungsgemäße Spannungswandlerschaltung auch so ausgelegt werden, daß sie durchgängig im Buck-/Boost-Combimode arbeitet, daß also unabhängig vom Verhältnis der Eingangsspannung Uₑ zur gewollten Ausgangsspannung Uₐ das erste Schaltelement 1 und das zweite Schaltelement 4 synchron angesteuert sind, d. h. stets gleichzeitig sperrend sind.

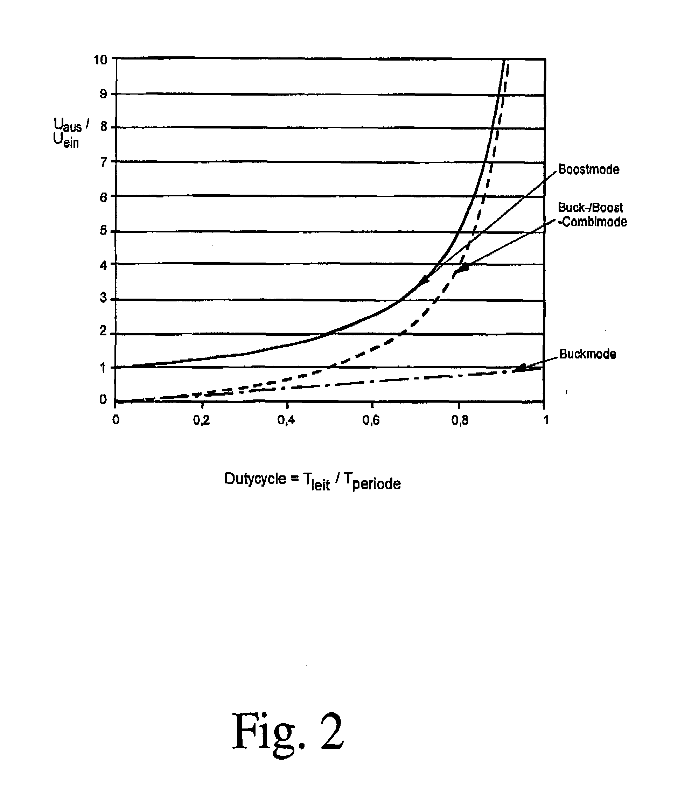

In der Fig. 2 sind Übertragungsfunktionen Uₐᵤₛ in Abhängigkeit von Uₑᵢₙ dargestellt. Daraus ergibt sich folgendes:

Bei einem festen Verhältnis von Uₐᵤₛ / Uₑᵢₙ zeigt sich beim Übergang vom Buckmode in den Boostmode (und umgekehrt, nur möglich, wenn Dₑᵢₙ = Uₐᵤₛ) eine starke Veränderung im Dutycycle = Tastverhältnis. Da der Dutycycle die leitende Zeit des jeweilig betriebenen Schaltelements beschreibt und der hieraus resultierende Stromfluß durch die gemeinsame Speicherdrossel hierdurch eingestellt wird, ist durch diesen "Sprung" in der Übertragungsfunktion ein Sprung im Stromverlauf erkennbar. Das Ergänzen des Buckmodes bzw. des Boostmodes durch den Buck-/Boost-Combimode reduziert den zuvor erläuterten Sprung. Die Intensität des Sprungs hängt vom aktuell vorliegenden Dutycycle ab, so daß pauschal anzustreben wäre, den Übergang vom Buckmode in den Buck-/Boost-Combimode bei möglichst kleinen Dutycycle-Werten durchzuführen, den Übergang vom Buck-Boost-Combimode in den Boostmode dagegen bei möglichst großen Dutycycle-Werten, Anhand der Übertragungsfunktionen in Fig. 2 ist deutlich erkennbar, daß bei kleinen Dutycyle-Werten die Übertragungsfunktionen von Buckmode und Buck-Boost-Combimode nahe zusammenliegen und bei großen Dutycyle-Werten die Übertragungsfunktionen von Boostmode und Buck-/Boost-Combimode sich annähern,

Gegen die Wahl der Umschaltpunkte bei kleinen Dutycycle-Werten bzw. bei großen Dutycycle-Werten spricht, daß der Buck-/Boost-Combimode selbst mehr Verluste produziert als der entsprechende Einzelwandler. Hier gilt es, einen Kompromiß festzulegen, der auf Umschaltwerte zielt, wenn sich die Eingansspannung im Bereich von etwa 0,9Uₐᵤₛ < Uₑᵢₙ = > 1, 1 Uₐᵤₛ bewegt.

Da der Dutycycle zusätzlich durch die Regelvorgabe für die sinusförmige Stromaufnahme (PFC-Forderung) im Regler eingestellt wird, muß davon ausgegangen werden, daß der Umschaltvorgang zwischen den einzelnen Wandlermodes einen Sprung in den Übertragungsfunktionen und somit auch im Stromverlauf aufweist. Zur Bedämpfung der erläuterten Sprungsdynamik wird im Umschaltaugenblick eine Art Softschaltfunktion ähnlich einem Softstartvorgang eingeschaltet, die aus dem Sprungvorgang einen stetigen Änderungsvorgang realisiert. So wird die durch den Buck-/Boost-Combimode bereits reduzierte Sprungdynamik zusätzlich bedämpft, so daß eine optimale Einstellung der Umschaltwerte erfolgen kann,

## Patentansprüche

1. Spannungswandlerschaltung zum Umwandeln einer veränderlichen Eingangsspannung in eine als Gleichspannung zur Verfügung zu stellende stabilisierte Ausgangsspannung, mit einem ersten Schaltelement (1), z. B. einem Schalttransistor, einem ersten Gleichrichter (2), z. B. einer Gleichrichterdiode oder einem Gleichrichtertransistor, einer Speicherdrossel (3), einem zweiten Schaltelement (4), wiederum z. B. einem Schalttransistor, einem zweiten Gleichrichter (5), wiederum z. B. einer Gleichrichterdiode oder einem Gleichrichtertransistor, einem Speicherkondensator (6), einem Meßwiderstand (7) und einer Steuer- und Regeleinheit (8),
**dadurch gekennzeichnet,**
**daß** das erste Schaltelement (1) und das zweite Schaltelement (4) dann, wenn die Eingangsspannung (U_{c}) größer als das das X-fache der gewollten Ausgangsspannung (Uₐ) und kleiner als das Y-fache der gewollten Ausgangsspannung (Uₐ) ist, synchron angesteuert sind, d. h. stets gleichzeitig leitend und stets gleichzeitig sperrend sind.

2. Spannungswandlerschaltung nach Anspruch 1, **dadurch gekennzeichnet, daß** das erste Schaltelement (1) beim Auftreten einer transienten Überspannung durch die Steuer- und Regeleinheit (8) sperrend gesteuert wird.

3. Verfahren zum Betreiben einer Spannungswandlerschaltung zum Umwandeln einer veränderlichen Eingangsspannung in eine als Gleichspannung zur Verfügung zu stellende stabilisierte Ausgangsspannung, mit einem ersten Schaltelement, z. B. einem Schalttransistor, einem ersten Gleichrichter, z. B. einer Gleichrichterdiode oder einem Gleichrichtertransistor, einer Speicherdrossel, einem zweiten Schaltelement, wiederum z. B. einem Schalttransistor, einem zweiten Gleichrichter, wiederum z. B. einer Gleichrichterdiode oder einem Gleichrichtertransistor, einem Speicherkondensator, einem Meßwiderstand und einer Steuer- und Regeleinheit,
**dadurch gekennzeichnet,**
**daß** das erste Schaltelement und das zweite Schaltelement dann, wenn die Eingangsspannung größer als das X-fache der gewollten Ausgangsspannung und kleiner als das Y-fache der gewollten Ausgangsspannung ist, synchron angesteuert werden, d. h. stets gleichzeitig leitend und stets gleichzeitig sperrend gesteuert werden.
